# EUROPEAN PATENT APPLICATION

(11) **EP 3 228 370 A1**
(43) Date of publication of application: **11.10.2017**
(21) Application number: 15865388.1
(22) Date of filing: 02.12.2015
(51) Int. Cl.: A63F 9/10, A63F 13/215, A63F 13/40

(54) **PUZZLE SYSTEM INTERWORKING WITH EXTERNAL DEVICE**

(30) Priority: 03.12.2014 KR 20140172159
(71) Applicant: MTEK C&K CO., LTD, Nam-gu Inch'on gwangyoksi 402-711 (KR)
(72) Inventor: KIM, Jong-Yong, Suwon Gyeonggi-do 440-330 (KR)
(74) Representative: TBK
(86) International application number: PCT/KR2015/013028
(87) International publication number: WO 2016/089098

(57) **Abstract**

The present invention relates to a puzzle system interworking with an external device and, more specifically, to a puzzle system interworking with an external device, which outputs an event corresponding to a puzzle to arouse interest of a user when the user completes the puzzle, and also outputs an event corresponding to an image forming the puzzle to increases interest when the user clicks on the image, so that the puzzle system can used as a learning tool as well as a game tool. The present invention for achieving the above-described purpose comprises: a puzzle device comprising multiple puzzle pieces forming a puzzle and a frame on which the puzzle pieces are safely mounted; a relay device connected to the puzzle device through communication; and an external device connected to the relay device and the puzzle device through communication, wherein the puzzle device has a sensing module for sensing the completion of the puzzle pieces. When the sensing module senses the completion of the puzzle pieces, the puzzle device transmits a signal relating to the kind of the puzzle together with a completion sensing signal to the relay device or to both the relay device and the external device.

## Description

### [Technical Field]

The present invention relates to a puzzle system interworking with an external device, and more specifically, to a puzzle system interworking with an external device, which outputs an event corresponding to a puzzle to arouse interest of a user when the user completes the puzzle, and which also outputs an event corresponding to an image forming the puzzle to increase interest when the user clicks on the image so that the puzzle system can be used as a learning tool as well as a game tool.

### [Background Art]

Generally, a puzzle with a picture or text is configured such that a user coherently places puzzle pieces set composed of a plurality of puzzle pieces on a main body such as a board to complete a picture or text in the form of being assembled so that the picture or text drawn on the puzzle pieces is made.

The picture used for the puzzle is designed and printed based on a picture or photograph of a cartoon character or the like, and the puzzle is used as a game tool for children to play with or as a learning tool by dividing text into many pieces.

In addition, puzzles are used for leisure activities not only for children but also for all ages, and provide edutainment to children and a culture through which families can communicate. Also, puzzles are used for prevention and complementary therapy for diseases such as dementia as well as education and games because of their medical and psychological effects, such as visual activity, coordination ability, psychological cognitive ability, prevention of dementia, and improvement of dexterity.

However, conventionally, such puzzles have a problem in that users soon tire of the puzzle after assembling them a few times and do not use them continuously.

Thus, various technologies have been developed to continuously maintain interest of users. An example of such a technology is disclosed in Korean Patent No. 10-1005344, as illustrated in FIGS. 1 to 3, wherein a puzzle toy 10 includes a piece set 20 including a plurality of component pieces 22, and a main body 30 in which the piece set 20 is accommodated, wherein each of the plurality of component pieces 22 has a rear surface on which a plurality of lattices 26 are formed, and the main body 30 includes light-emitting devices 32 which are arranged to correspond to the respective lattices 26 and emit light towards the lattices 26; light-receiving devices 34 configured to detect light reflected from the lattices 26; a signal analyzer 36 configured to determine colors of the lattices 26 using signals detected by the light-receiving devices 34 and generate output signals for the lattices 26; a feedback call unit 37 configured to analyze the output signals for the lattices 26 received from the signal analyzer 36, recognize a lattice 26 arrangement of the piece set 20, and determine assembly success/failure of the piece set 20 and a type of the piece set 20 when the piece set 20 is completed; and a feedback processing unit 38 configured to output information regarding the assembled piece set 20 in response to the signal received by the feedback call unit 37.

The technology disclosed in Korean Patent No. 10-1005344 is advantageous in that a location of each of the pieces 22 is detected through the light-emitting devices 32 and the light-receiving devices 34, and it is determined whether each of the pieces 22 is located at a designated position so that completion of a placement of a puzzle is easily checked and as a result, a sound and an image can be output. However, a plurality of the light-emitting devices 32 and the light-receiving devices 34 need to be provided in each part of the main body 30 to precisely check the location of each of the pieces, resulting in an increase in complexity of a configuration and manufacturing costs.

In addition, the puzzle has a problem in that a sound or an image is output only from the puzzle main body so that users may be easily bored after assembling the puzzle a number of times and thus do not continuously use the puzzle.

### [Disclosure]

### [Technical Problem]

The present invention was devised to solve the aforementioned problems, and an objective of the present invention is to provide a puzzle system interworking with an external device, which consists of a puzzle device including a frame on which a plurality of puzzle pieces are placed, a sensing module configured to detect completion of a placement of a puzzle when the puzzle pieces are placed at designated positions, and a first communication module configured to transmit a completion detection signal when the completion of the placement of the puzzle is detected; a relay device configured to output a sound corresponding to a type of puzzle when the completion detection signal is received from the first communication module and an external device configured to output an event, such as an output of a corresponding moving image or sound or a performance of a motion, so that content of the puzzle is represented in various forms according to the puzzle, thereby inducing continuous interest of users, and since a single puzzle is associated with an event containing various piece of content, a variety of enjoyable activities are provided to the users.

In addition, another objective of the present invention is to provide a puzzle system interworking with an external device, wherein cells on which each of puzzle pieces is placed are formed in a frame forming the puzzle device, switches are provided in the cells, and when a specific cell is pressed after completion of a placement of a puzzle is detected, the switch corresponding to the specific cell is operated and a control signal corresponding to an image on the puzzle piece, which is placed on the specific cell at which the switch is located, is transmitted to the relay device and the external device so that a sound and an event corresponding to the image of the puzzle piece are output, thereby inducing interest of a user which leads to an increased learning effect when the puzzle system is used to teach toddlers or children as well as for gameplay.

In addition, still another objective of the present invention is to provide a puzzle system interworking with an external device, wherein a puzzle device which includes a frame and puzzle pieces is provided with a microphone to record a voice of a user, a switch is operated and the microphone is also operated to store a name or content uttered by the user corresponding to an image on the specific puzzle piece when a specific puzzle piece is pressed after completion of a placement of a puzzle, a control signal corresponding to the specific puzzle piece is transmitted together with a voice signal, the relay device outputs the voice signal first by receiving the voice signal and then outputs a correct sound corresponding to the specific puzzle piece, thereby increasing a learning effect by allowing the user to compare his/her own pronunciation with a correct pronunciation.

### [Technical Solution]

In order to achieve the above objectives, one aspect of the present invention provides a puzzle system interworking with an external device, the puzzle system including: a puzzle device comprising a plurality of puzzle pieces forming a puzzle and a frame on which the puzzle pieces are placed; and an external device connected to the puzzle device through communication.

Herein, the puzzle device may include a sensing module configured to detect completion of a placement of the puzzle pieces, and when the sensing module detects the completion of the placement of the puzzle pieces, the sensing module may transmit a signal relating to a type of puzzle along with a completion detection signal to the external device.

In this case, when the external device receives the completion detection signal from the puzzle device, the external device may output an event corresponding to the puzzle.

In addition, the frame may include a plurality of cells on which the puzzle pieces are placed, and the cells may be provided with switches.

Here, when the switch is operated, the puzzle device may transmit a control signal corresponding to the operated switch to the external device according to the type of puzzle.

In this case, the external device may output an event corresponding to the control signal received from the puzzle device.

Meanwhile, the puzzle device may be provided with a microphone, and when the switch is operated, the puzzle device may record a voice of a user and transmit voice information together with the control signal to the external device.

In this case, when the external device simultaneously receives the voice information and the control signal, the external device may first output the voice information and then output a sound corresponding to the control signal so that the user is allowed to compare a pronunciation of the user with a correct pronunciation stored in a relay device.

Also, one or some of the puzzle pieces may be provided with a near-field communication (NFC) tag or a radio frequency identification (RFID) tag which stores information about the type of puzzle, and a reader for detecting the NFC tag or RFID tag may be provided in the sensing module.

In addition, the puzzle system may further include a relay device configured to relay a signal between the puzzle device and the external device.

In this case, the relay device may include a figure doll in various shapes and a cradle on which the figure doll is seated.

### [Advantageous Effects]

According to the present invention described above, since a puzzle device which includes a frame on which a plurality of puzzle pieces are placed, a sensing module configured to determine completion of a placement of a puzzle when the puzzle pieces are placed at designated positions, and a first communication module configured to transmit a completion detection signal when the completion of the placement of the puzzle is detected; a relay device which outputs a sound corresponding to a type of puzzle when receiving the completion detection signal from the first communication module of the puzzle device; and an external device which outputs an event, such as an output of a corresponding moving image or sound or performance of a motion is provided, it is possible to represent content of a puzzle in various forms according to the puzzle to induce continuous interest of users, and it is also possible to provide a variety of enjoyable activities to the users by associating a single puzzle with an event containing various pieces of content.

In addition, according to the present invention, since cells on which each of the puzzle pieces is placed are formed in the frame forming the puzzle device, switches are provided in the cells, and when a specific cell is pressed after the completion of the placement of the puzzle is detected, the switch corresponding to the specific cell is operated and a control signal corresponding to an image on the puzzle piece, which is placed on the specific cell at which the switch is located, is transmitted to the relay device and the external device, a sound and an event corresponding to the image of the puzzle piece are output to induce interest of a user, which may lead to increasing a learning effect when the puzzle system is used to teach toddlers or children as well as for gameplay, and which may also contribute to preventing and treating dementia in the elderly.

Furthermore, according to the present invention, the puzzle device including the frame and the puzzle pieces is provided with a microphone to record a voice of a user, a corresponding switch is operated and the microphone is also operated to store a name or content uttered by the user corresponding to an image on the specific puzzle piece when a specific puzzle piece is pressed after the completion of the placement of the puzzle, a control signal corresponding to the specific puzzle piece is transmitted together with a voice signal, the relay device outputs the voice signal first by receiving the voice signal and then outputs a correct sound corresponding to the specific puzzle piece, thereby increasing a learning effect by allowing the user to compare his/her own pronunciation with a correct pronunciation.

### [Description of Drawings]

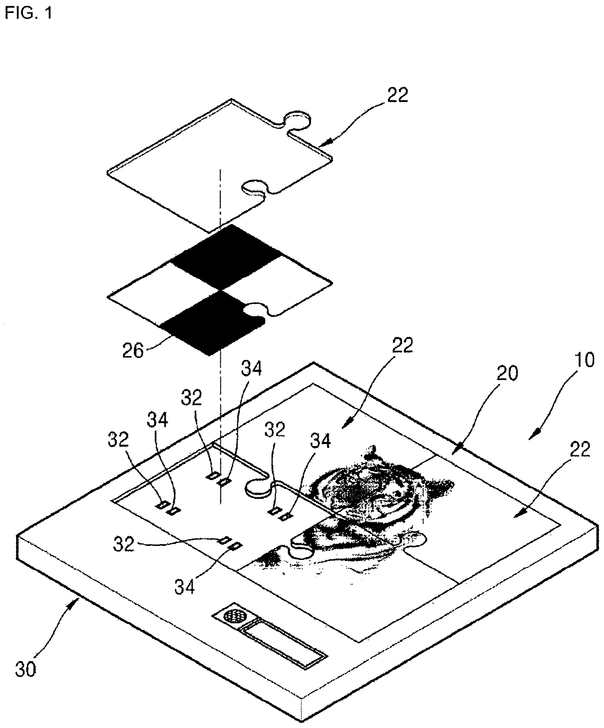

FIG. 1 is a perspective view of a conventional puzzle.

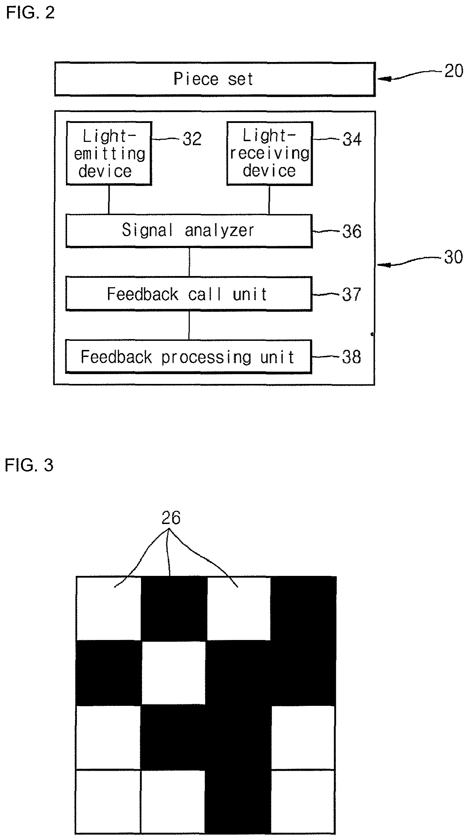

FIG. 2 is a block diagram illustrating the conventional puzzle.
FIG. 3 is a rear view showing back surfaces of a set of pieces of the conventional puzzle.
FIG. 4 is a conceptual view illustrating a puzzle system interworking with an external device according to the present invention.
FIG. 5 is a block diagram illustrating the puzzle system interworking with an external device according to the present invention.
FIG. 6 is a plane view of the puzzle system interworking with an external device according to the present invention.
FIG. 7 is a plane view of a frame of the puzzle system interworking with an external device according to the present invention.
FIG. 8 is a diagram illustrating a state of the puzzle system interworking with an external device according to the present invention.
FIG. 9 is a conceptual diagram of a puzzle system interworking with an external device according to another embodiment of the present invention.

### [Modes of the Invention)

Reference will now be made in greater detail to an exemplary embodiment of the present invention, an example of which is illustrated in the accompanying drawings. Wherever possible, the same reference numerals will be used throughout the drawings and the description to refer to the same or like parts. Further, it should be understood that the embodiment of the present invention may be changed to a variety of embodiments, and the scope and spirit of the present invention are not limited to the embodiment that will be described below.

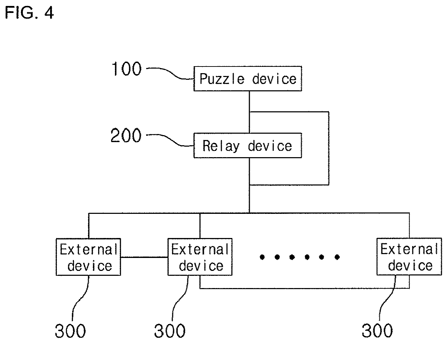

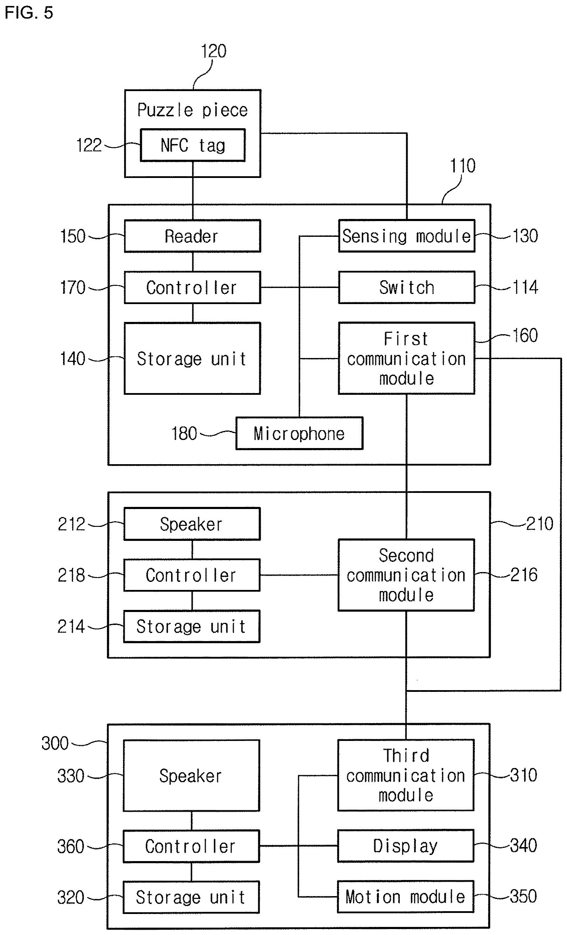

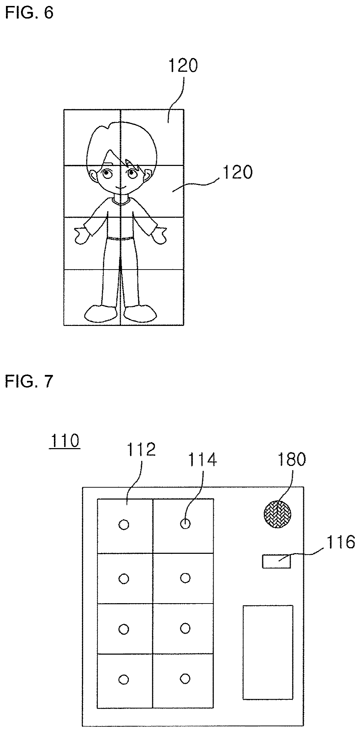

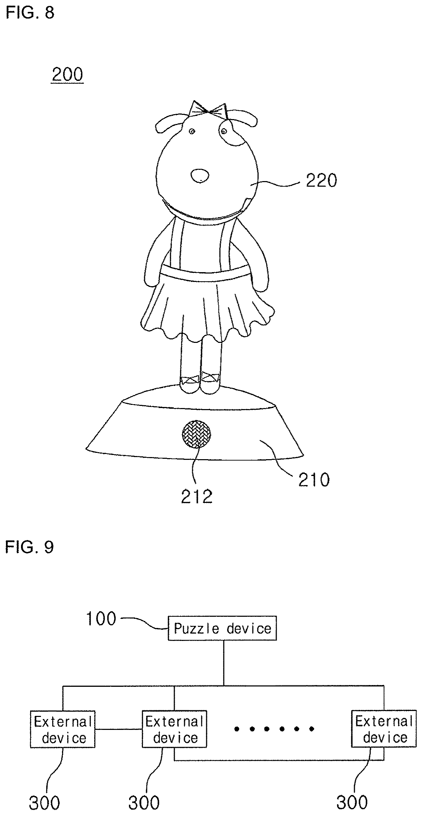

FIG. 4 is a conceptual view illustrating a puzzle system interworking with an external device according to the present invention, FIG. 5 is a block diagram illustrating the puzzle system interworking with an external device according to the present invention, FIG. 6 is a plane view of the puzzle system interworking with an external device according to the present invention, FIG. 7 is a plane view of a frame of the puzzle system interworking with an external device according to the present invention, FIG. 8 is a diagram illustrating a state of the puzzle system interworking with an external device according to the present invention, and FIG. 9 is a conceptual diagram of a puzzle system interworking with an external device according to another embodiment of the present invention.

The present invention is directed to a puzzle system interworking with an external device, and as illustrated in FIGS. 4 to 8, the puzzle system includes a puzzle device 100 including a frame 110 on which a plurality of puzzle pieces 120 are placed, a relay device 200 connected to the puzzle device 100 through wired or wireless communication, and an external device 300 connected to the relay device 200 and the puzzle device 100 through wired or wireless communication.

In this case, only one external device 300 or a plurality of external devices 300 may be provided, and the external devices 300 may be connected to each other through wired or wireless communication.

In addition, the puzzle device 100 may include the frame 110 provided with cells 112 on which each of puzzle pieces 120 forming a puzzle is placed, and a sensing module 130 for sensing completion of a placement of the puzzle pieces 120 forming the puzzle wherein the sensing module 130 uses the configuration for sensing completion of a placement of a puzzle which is disclosed in Korean Patent No. 10-1447200 or various well-known configurations for sensing the completion of a placement of a puzzle, and a detailed description thereof will be omitted.

In this case, a separate button 116 for operating the sensing module 130 is provided on one side of the frame 110, and when the button 116 is pressed, the sensing module 130 is operated to determine whether each of the puzzle pieces 120 on each of the cells 112 is placed at a designated position.

Therefore, when the sensing module 130 detects the completion of the placement of the puzzle, the sensing module 130 generates a completion detection signal and transmits the completion detection signal to the relay device 200 and the external device 300 through a first communication module 160 provided in the frame 110, wherein the completion detection signal may be transmitted only to the relay device 200 or to both the relay device 200 and the external device 300.

In this case, when the puzzle device 100 transmits the completion detection signal, the puzzle device 100 also transmits a signal about a type of puzzle completed. As a configuration for sensing the type of the puzzle completed, a near-field communication (NFC) tag 122 which stores a unique code corresponding to the puzzle is provided at one or some of the puzzle pieces 120, and a reader 150 for sensing the NFC tag 122 is provided in the frame 110 of the puzzle device 100 to accurately determine the type of puzzle. A radio frequency identification (RFID) tag may be used instead of the NFC tag 122.

Also, the frame 110 includes a storage unit 140 to store information about various puzzles and also store codes and signals corresponding to each puzzle.

Although not illustrated in the drawings, the information about puzzles may be provided through a separate externally connected storage device, such as a cartridge, a universal serial bus (USB), or a card equipped with an integrated circuit (IC) chip.

In addition, the sensing module 130 of the puzzle device 100 detects the completion of the placement of the puzzle and transmits a puzzle signal about a pertinent puzzle along with the completion detection signal, and the relay device 200 outputs a sound corresponding to the puzzle to notify the user of the completion of the placement of the puzzle when the relay device 200 receives the signals.

In this case, as illustrated in FIG. 8, the relay device 200 is composed of a cradle 210 acting as a support and a figure 220 formed to have various shapes to be seated on an upper part of the cradle 210, wherein the cradle 210 is provided with a storage unit 214 which stores information about each puzzle and sound files corresponding to each of the puzzles, and a speaker 212 is provided on one side of the cradle 210 to output a sound according to a sound file corresponding to the puzzle.

In addition, the relay device 200 is provided with a second communication module 216 and receives the completion detection signal and the puzzle signal from the first communication module 160 of the puzzle device 100, and the relay device 200 transmits the completion detection signal and the puzzle signal to the external device 300 through the second communication module 216 according to a situation.

Accordingly, when the external device 300 receives the completion detection signal and the puzzle signal from the puzzle device 100 or the relay device 200, the external device 300 outputs an event corresponding to a pertinent puzzle.

In this case, the external device 300 may be configured as a device, such as a smart TV or a smart pad, which includes a display 340 and a speaker 330, and the external device 300 may be manufactured separately and used, and the event may play a file corresponding to the pertinent puzzle from among moving images or sound files stored in the storage unit 320 provided inside the external device 300.

In addition, the event does not only simply show a moving image, but also provides a story, and in that case, a plurality of external devices 300 may be provided and each of the external devices 300 may play a specific character role of the story and alternately or simultaneously output lines of a corresponding character role or sound effects so that the event can be represented more realistically.

In addition, the external device 300 may be provided with a motion module 350 which allows a specific motion as well as an image and sound to be performed so that the external device 300 may be allowed to perform a motion corresponding to a specific story.

Synchronization for outputting the event may be achieved by the external devices 300 being connected using wired or wireless communication through a third communication module 310 provided in each of the external devices 300.

In addition, the event may be composed by the external device 300 only, or the relay device 200 may play a role in the story and may provide the story along with the external device 300, wherein information about the event is stored in the storage units 140, 241, and 320 which are included in the puzzle device 100, the relay device 200, the external device 300, respectively, and when a puzzle signal corresponding to the event is received, the event is output.

In this case, the event may be an animation played on the external device 300 or a game that can be executed by a computer or various game consoles.

In addition, the plurality of cells 112 on which the puzzle pieces 120 forming the puzzle are placed are provided in the frame 110, and switches 114 are provided in the cells 112, wherein the switches 114 may be formed in the cells 112 or may be formed in some of the cells 112.

In this case, the switch 114 may sense being pressed when the user presses the puzzle piece 120 placed on the cell 112, and the switch 114 may detect being pressed using various well-known methods, such as a pressure sensor method that detects a pressure, a method of forming a contact point and detecting the contact point being pressed, and an electrostatic touch screen method.

Meanwhile, in an example of detecting the completion of the placement of the puzzle, when a pressing of the specific cell 112 for sensing the completion is detected among the plurality of cells 112, which is a criterion for determining whether each puzzle is completed, a corresponding puzzle is determined to be completed, and information on the specific cell 112 acting as a completion requirement is stored in the storage unit 140, a cartridge, or the like.

In this case, as a method of sensing the pressing of the specific cell 112, the pressing is detected through the switch 114 provided in the cell 112, and the switch 114 of the specific cell 112 is activated to detect the completion.

The switches 114 are not normally operated, and when the puzzle device 100 transmits the puzzle completion signal as each of the puzzle pieces 120 is precisely assembled, each of the switches 114 is activated and the pressing of the puzzle pieces 120 is detected.

When the specific switch 114 is operated as the corresponding puzzle piece 120 is pressed, the puzzle device 100 transmits a control signal corresponding to the switch 114 to the relay device 200 and the external device 300 according to a type of puzzle, wherein the control signal may be transmitted only to the relay device 200 or may be transmitted simultaneously to both the relay device 200 and the external device 300.

In this case, the relay device 200 and the external device 300 identify the puzzle piece 120 corresponding to the pressed switch 114 according to information about the puzzle stored in the storage units 214 and 320, which are provided in the relay device 200 and the external device 300, respectively, and an event corresponding to the puzzle piece 120 is accordingly output.

For example, a puzzle shown in FIG. 6 in which each body part of a boy is depicted on a puzzle piece exists. When the puzzle piece 120 on which an eye of the boy is located is pressed after the puzzle is completed, the pressing is detected, the relay device 200 outputs the word "EYE," and the external device 300 outputs an event such as playing a moving image with a description of an eye.

In addition, when four puzzle pieces 120 forming the head are simultaneously pressed, the puzzle device 100 transmits a control signal corresponding to the head to the relay device 200 and the external device 300, the relay device 200 identifies the pressed puzzle pieces 120, recognizes the head, which is an image commonly indicated by the pertinent puzzle pieces 120, and outputs "Head", and the external device 300 shows a moving image corresponding to the head.

In addition, when any one of the four puzzle pieces 120 is pressed, the head is detected, and a control signal corresponding to the head may be transmitted to the relay device 200 and the external device 300.

In this case, in a case in which a plurality of external devices 300 are provided, the story about the head is made into an event. If the story is in the form of questions and answers between a student and a teacher, one external device 300 acts as the teacher and another external device 300 acts as the student, thereby providing the user with information about the head through an exchanged conversation.

It should be apparent that a witty story may be presented for entertainment purpose rather than for educational purpose.

In addition, the puzzle device 100 is provided with a microphone 180, and when the user presses the puzzle piece 120 after completing the puzzle, the switch 114 is operated, and once the switch 114 is operated, the microphone 180, which is normally turned off, is activated to record an uttered voice of the user.

Then, the recorded voice information is transmitted to the external device 200 through the first communication module 160. When the external device 200 simultaneously receives the voice information and a control signal for the switch 114, the external device 200 outputs a sound corresponding to the voice information through the speaker 212 and then outputs a sound corresponding to the control signal.

For example, when the user says "eye" while pressing the puzzle piece 120 on which an eye is drawn among the plurality of puzzle pieces 120 shown in FIG. 6, the puzzle device 100 records the voice and transmits voice information to the relay device 200, and the relay device 200 outputs the word "eye" uttered by the user and then outputs a correct pronunciation for the English word "EYE" by a native speaker so that the user can correct his/her pronunciation by comparing the pronunciation with the native speaker's pronunciation.

It should be apparent that when a child uses the puzzle device 100, a pronunciation of the child may be corrected by outputting a pronunciation of Korean instead of English so that a language to be output may be adjusted according to the user.

In another embodiment of the present invention, as shown in FIG. 9, a puzzle system consists of a puzzle device 100 including a frame 110 on which a plurality of puzzle pieces 120 forming a puzzle are placed and an external device 300 connected to the puzzle device 100 through wired or wireless communication. Unlike the aforementioned embodiment, the puzzle device 100 and the external device 300 are directly connected to each other through communication without a relay device 200 being provided, and only one external device 300 or a plurality of external devices 300 may be used.

In this case, the other elements are the same as those described above, and hence detailed descriptions thereof will be omitted.

However, when an operation of a switch 114 installed in a cell 112 forming the frame 110 is detected after a puzzle is completed in the puzzle device 100, a microphone 180 of the puzzle device 110 is operated to record a voice of a user and recorded voice information is directly transmitted to the external device 300.

In this case, the received information is a control signal and voice information, the external device 300 first outputs the voice information through a speaker 330 and then outputs a correct voice file corresponding to the control signal which is stored in a storage unit 320 so that the user is allowed to correct his/her pronunciation by comparing his/her own voice with a correct sound.

The voice stored in the storage unit 320 may be in a foreign language or Korean, and a language setting may be made separately.

In addition, in a case in which a specific event corresponding to the received control signal is stored, the event is also output, and the event may be a moving image or a sound file, as described above, and in a case in which the external device 300 is a device which performs a specific motion (a specified motion of an animal when the device is an animal robot), the event may involve performing the specific motion.

Although preferred embodiments of the present invention have been described for illustrative purposes, those skilled in the art should appreciate that various modifications, additions and substitutions are possible, without departing from the scope and spirit of the invention as disclosed in the accompanying claims.

### [Industrial Applicability]

The present invention relates to a puzzle system interworking with an external device, and more specifically, to a puzzle system interworking with an external device, which outputs an event corresponding to a puzzle to induce interest of a user when the user completes the puzzle and which also outputs an event corresponding to an image forming the puzzle to increase interest when the user clicks on the image so that the puzzle system can be used as a learning tool as well as a game tool.

## Claims

1. A puzzle system interworking with an external device, the puzzle system comprising:
a puzzle device comprising a plurality of puzzle pieces forming a puzzle and a frame on which the puzzle pieces are placed; and
an external device connected to the puzzle device through communication.

2. The puzzle system of claim 1, wherein the puzzle device comprises a sensing module configured to detect completion of a placement of the puzzle pieces, and when the sensing module detects the completion of the placement of the puzzle pieces, the sensing module transmits a signal relating to a type of puzzle along with a completion detection signal to the external device.

3. The puzzle system of claim 2, wherein when the external device receives the completion detection signal from the puzzle device, the external device outputs an event corresponding to the puzzle.

4. The puzzle system of claim 2, wherein the frame comprises a plurality of cells on which the puzzle pieces are placed, and the cells are provided with switches.

5. The puzzle system of claim 4, wherein, when the switch is operated, the puzzle device transmits a control signal corresponding to the operated switch to the external device according to the type of puzzle.

6. The puzzle system of claim 5, wherein the external device outputs an event corresponding to the control signal received from the puzzle device.

7. The puzzle system of claim 5, wherein the puzzle device is provided with a microphone, and when the switch is operated, the puzzle device records a voice of a user and transmits voice information together with the control signal to the external device.

8. The puzzle system of claim 7, wherein, when the external device simultaneously receives the voice information and the control signal, the external device first outputs the voice information and then outputs a sound corresponding to the control signal so that the user is allowed to compare a pronunciation of the user with a correct pronunciation stored in a relay device.

9. The puzzle system of claim 2, wherein one or some of the puzzle pieces are provided with a near-field communication (NFC) tag or a radio frequency identification (RFID) tag which stores information about the type of puzzle, and a reader for detecting the NFC tag or RFID tag is provided in the sensing module.

10. The puzzle system of claim 1, further comprising a relay device configured to relay a signal between the puzzle device and the external device.

11. The puzzle system of claim 10, wherein the relay device comprises a figure doll in various shapes and a cradle on which the figure doll is seated.
